# EUROPEAN PATENT APPLICATION

(11) **EP 4 726 682 A1**
(43) Date of publication of application: **15.04.2026**
(21) Application number: 24819195.9
(22) Date of filing: 24.05.2024
(51) Int. Cl.: G06V 40/40, G06T 7/20

(54) **BIOMETRIC AUTHENTICATION SYSTEM**

(30) Priority: 08.06.2023 JP 2023095123
(71) Applicant: Hitachi, Ltd., Tokyo 100-8280 (JP)
(72) Inventor: KAGA Yosuke, Tokyo 100-8280 (JP); TAKAHASHI Kenta, Tokyo 100-8280 (JP); NAKAMURA Wataru, Tokyo 100-8280 (JP)
(74) Representative: Mewburn Ellis LLP
(86) International application number: PCT/JP2024/019277
(87) International publication number: WO 2024/252963

(57) **Abstract**

To provide a technology capable of performing liveness detection rapidly. A client (1000) includes: an image acquisition unit (1020) configured to acquire camera images in a time series; a posture estimation unit (1050) configured to estimate a posture of a hand based on the acquired camera images; and a liveness detection unit (1060) configured to determine that the hand is a living body when a specific motion of the hand is detected based on the estimated posture.

## Description

### TECHNICAL FIELD

The present invention relates to a biometric authentication system.

### BACKGROUND ART

Biometric authentication, which verifies that a user is the person who has been previously registered based on individual physical and behavioral characteristics, offers high convenience because it eliminates the need to memorize passwords or carry physical items such as IC cards, and has thus attracted attention as a reliable means of personal identification. In biometric authentication, feature quantities are extracted from physical and behavioral characteristics such as fingerprints, faces, irises, veins, and palmprints, and a determination is made as to whether or not the person is genuine by comparing them with the feature quantities registered in advance.

One of the vulnerabilities of biometric authentication is impersonation using an artificial object. For example, a third party may obtain biometric information such as the fingerprint, face, iris, vein, or palmprint of the genuine user, create an artificial object including such biometric information, and present it to the biometric authentication system, thereby posing a risk that the third party may succeed in authentication fraudulently.

In particular, in a biometric authentication system that performs authentication by acquiring biometric information using a general-purpose camera, impersonation can easily be carried out by presenting to the system a sheet of paper printed with a biometric image or a tablet displaying such a biometric image. Therefore, in a biometric authentication system, it is essential to use a liveness detection technique that detects that what is presented is a part of a living human body rather than an artificial object.

Approaches to realizing such liveness detection can be broadly classified into the following four types.

The first approach is sensor-based detection. In this method, sensors different from general-purpose cameras are used to sense electrical characteristics, three-dimensional shapes, and the like of the subject, thereby detecting that it is a living body. Although this method provides high reliability, it requires dedicated sensors, which increases cost and makes it difficult to implement in existing devices.

The second approach is learning-based detection. In this method, biometric data such as face, vein, or palmprint images are learned using machine learning, and detection is performed by classifying them into living bodies and artificial objects. This approach prepares a large amount of training data consisting of biometric images and various patterns of artificial object images and trains a classifier capable of distinguishing between them. In methods using machine learning, performance deteriorates when there is a difference between the training data and the data to be identified. Accordingly, if the conditions at the time of liveness detection-such as the type of artificial object, environmental conditions such as lighting and white balance, or the camera or sensor used-differ from the conditions under which the training data were collected, the accuracy decreases.

The third approach is detection of biological reactions. This method performs liveness detection by acquiring biological reactions such as blinking, breathing, and pulsation. Since these biological reactions are subtle features, to reliably capture them, it is necessary that the frame rate, resolution, and optical performance of the camera are sufficiently high. If detection is attempted under conditions where any of these performances are insufficient, there is a risk of false detection in which a living body is incorrectly recognized as an artificial object. Therefore, high performance is required of the camera and the hardware that processes its output, making it difficult to implement the method for use with general-purpose camera devices.

The fourth approach is challenge-response type detection. This method is often used in electronic Know Your Customer (eKYC) systems that perform reliable identity verification over a network. It requires the user to perform specific actions such as closing the eyes, changing the direction of the face, or winking, and detects these actions. However, many of these require time for motion recognition, execution, and detection, and no method is known that allows instantaneous detection at the time of authentication.

Patent Document 1 relates to liveness detection that does not depend on dedicated sensors and uses a general-purpose camera. It performs liveness detection by determining whether movement, distortion, shape change, feature information, and three-dimensional state of a living body are each within the range of biometric information. This can be regarded as one type of the fourth approach described above.

### CITATION LIST

### PATENT DOCUMENT

[Patent Document 1] Japanese Patent No. 6482816

### SUMMARY OF THE INVENTION

### PROBLEMS TO BE SOLVED BY THE INVENTION

In the technique described in Patent Document 1, the user is required to perform a complex and random motion such as "make a fist with your hand, and after five seconds, raise your thumb and little finger," and liveness detection is performed using the movement speed of the fingers or color information of the background. Therefore, it is difficult to perform liveness detection quickly.

Furthermore, the technique described in Patent Document 1 is a rule-based method that performs detection by setting respective threshold values for movements, distortions, shape changes, feature information, and three-dimensional states of a living body. Accordingly, it is considered difficult to sufficiently reduce both the false detection rate and the missed detection rate.

Therefore, an object of the present invention is to provide a technology capable of performing liveness detection quickly.

### SOLUTIONS TO PROBLEMS

To solve the above problems, one representative biometric authentication system of the present invention includes, in a biometric authentication system, an image acquisition unit that acquires images in a time series, a posture estimation unit that estimates the hand posture from the acquired images, and a liveness detection unit that determines that the hand is a living body when a specific motion of the hand is detected from the estimated posture.

### EFFECTS OF THE INVENTION

According to the present invention, liveness detection can be performed quickly.

Problems, configurations, and effects other than those described above will become apparent from the following description of embodiments.

### BRIEF DESCRIPTION OF THE DRAWINGS

Fig. 1 is a block diagram showing an example configuration of the client according to the present embodiment.
Fig. 2 is a block diagram showing an example of the hardware configuration of the client according to the present embodiment.
Fig. 3 is a flowchart showing an example of a biometric registration process including liveness detection executed by the client according to the present embodiment.
Fig. 4 is a diagram showing an example of hand feature points extracted by the feature point acquisition unit.
Fig. 5 is a diagram showing an example of a detection state of a hand rotation motion rendered by the image output unit.
Fig. 6 is a diagram showing an example of a detection state of a pinching motion with fingers rendered by the image output unit.
Fig. 7 is a diagram showing an example of a detection state of a button-pressing motion with fingers rendered by the image output unit.
Fig. 8 is a flowchart showing an example of a biometric authentication process including liveness detection executed by the client according to the present embodiment.

### MODE FOR CARRYING OUT THE INVENTION

Hereinafter, embodiments of the invention will be described with reference to the drawings.

The present embodiment is a biometric authentication system that acquires camera images on a client, estimates hand posture from the camera images, detects a specific motion of the hand from the estimated posture, and performs biometric registration and biometric authentication when the detection is successful.

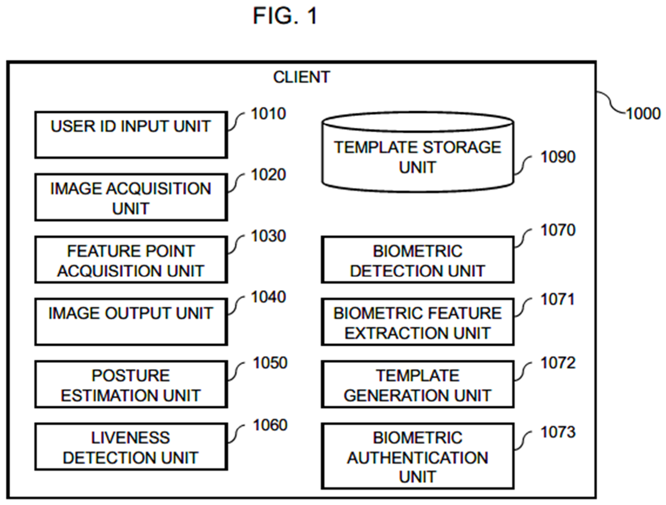

Fig. 1 is a block diagram showing an example configuration of the client according to the present embodiment.

In Fig. 1, a client 1000 includes a user ID input unit 1010, an image acquisition unit 1020, a feature point acquisition unit 1030, an image output unit 1040, a posture estimation unit 1050, a liveness detection unit 1060, a biometric detection unit 1070, a biometric feature extraction unit 1071, a template generation unit 1072, a biometric authentication unit 1073, and a template storage unit 1090. Each of these units will be described below.

The user ID input unit 1010 acquires input of a user ID assigned to a user via a keyboard, card reader, or memory on the client 1000. The image acquisition unit 1020 acquires camera images from a camera connected to the client 1000. The feature point acquisition unit 1030 extracts feature points of the hand from the camera images acquired by the image acquisition unit 1020.

The posture estimation unit 1050 estimates the hand posture based on the coordinates of the hand feature points extracted by the feature point acquisition unit 1030. The liveness detection unit 1060 performs liveness detection based on the hand posture estimated by the posture estimation unit 1050. This liveness detection determines that the hand in the camera image is a living body when a specific motion is detected from the hand posture.

The image output unit 1040 renders the result of the liveness detection on the camera image and outputs it to an output device such as a display.

The biometric detection unit 1070 performs biometric detection from the camera images. This biometric detection is processing for specifying the position of the living body in the camera image. For example, in the case of face authentication, the position of the face region is detected; in the case of finger vein authentication, the position of the finger region is detected; and in the case of palmprint authentication, the position of the palm region is detected.

The biometric feature extraction unit 1071 performs biometric feature extraction on the living body detected by the biometric detection unit 1070. In face authentication, biometric feature extraction is performed by cropping the face image and inputting it to a machine learning model to obtain feature quantities. In finger vein authentication, the finger image is cropped and a vein pattern emphasizing the vascular structure is obtained. In palmprint authentication, the palm image is cropped and a palmprint pattern is obtained.

The template generation unit 1072 generates a registration template based on the biometric features extracted by the biometric feature extraction unit 1071. The template storage unit 1090 stores the template generated by the template generation unit 1072.

The biometric authentication unit 1073 performs biometric authentication by comparing the biometric features extracted by the biometric feature extraction unit 1071 with the template registered in the template generation unit 1072.

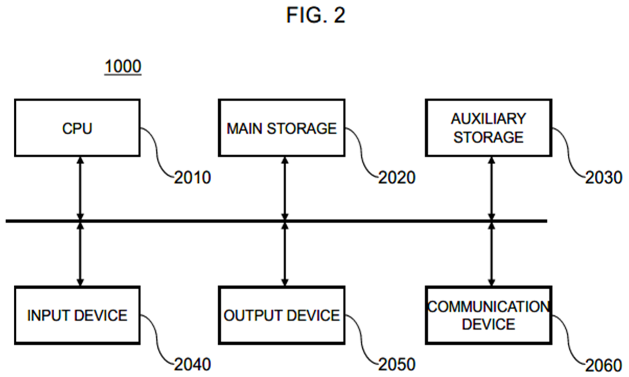

Next, the hardware configuration of the client 1000 will be described with reference to Fig. 2.

Fig. 2 is a block diagram showing an example of the hardware configuration of the client 1000 according to the present embodiment.

In Fig. 2, the client 1000 includes a CPU (Central Processing Unit) 8010, a main storage device 8020, an auxiliary storage device 8030, an input device 8040, an output device 8050, and a communication device 8060.

The CPU 8010 is a central processing unit that implements necessary functions by executing programs stored in the main storage device 8020. The programs include programs for realizing the user ID input unit 1010, image acquisition unit 1020, feature point acquisition unit 1030, image output unit 1040, posture estimation unit 1050, liveness detection unit 1060, biometric detection unit 1070, biometric feature extraction unit 1071, template generation unit 1072, and biometric authentication unit 1073 shown in Fig. 1.

The main storage device 8020 is a main memory used by the CPU 8010 when executing processing and is composed of volatile memory elements such as RAM (Random Access Memory). The auxiliary storage device 8030 is a storage device represented by an HDD (Hard Disk Drive) or SSD (Solid State Drive) and corresponds to the template storage unit 1090. Data stored by each unit is accumulated as data on the auxiliary storage device 8030.

The input device 8040 is used in the user ID input unit 1010 and image acquisition unit 1020 to read information, and is composed of a keyboard, biometric sensor, touch panel, smart device, scanner, or camera. The output device 8050 is used in the image output unit 1040 to output information and is composed of a display or the like. The communication device 8060 is used for the client 1000 to communicate with external devices.

With the above configuration, in the present embodiment, biometric registration and biometric authentication are performed after confirming, based on the motion of the hand estimated from the camera image, that the hand is not an artificial object.

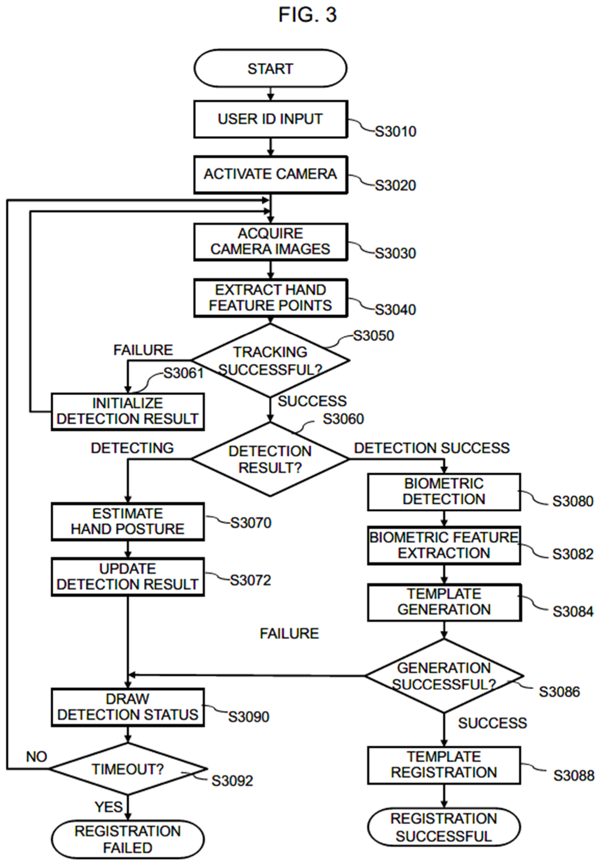

Next, a procedure for performing biometric registration using the client 1000 will be described with reference to Fig. 3.

Fig. 3 is a flowchart showing an example of a biometric registration process including liveness detection executed by the client 1000 according to the present embodiment.

First, a user ID input by the user is acquired by the user ID input unit 1010 of the client 1000 (step S2010). The user ID is typically represented as a character string of arbitrary length.

Next, the camera is activated (step S2020), and camera images including the user's hand are sequentially acquired using the image acquisition unit 1020 (step S2030). The image acquisition unit 1020 is a general-purpose camera mounted on the client 1000 and acquires images using the camera. The acquired camera images are displayed on an output device 8050 such as a display of the client 1000 by the image output unit 1040.

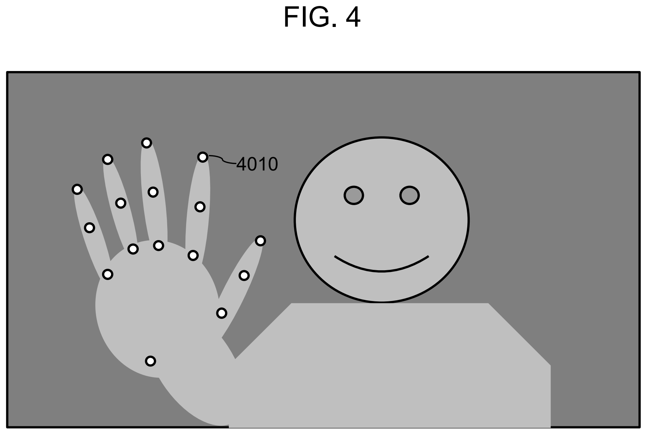

Next, feature points of the user's hand are extracted from the camera images acquired in step S2030 using the feature point acquisition unit 1030 (step S2040). An example of the hand feature points is shown in Fig. 4.

Fig. 4 is a diagram showing an example of the hand feature points extracted by the feature point acquisition unit 1030.

As shown in Fig. 4, feature points 4010 are set at positions such as fingertips, joints, and the lower end of the palm in the camera image, and by estimating these positions, it becomes possible to estimate the position and posture of the hand.

Returning to Fig. 3, based on the coordinates of the hand feature points obtained in step S2040, hand tracking processing is performed, and it is determined whether the tracking is successful (step S2050). In this tracking process, the hand coordinates in the previous frame are compared with the hand coordinates in the current frame. When the coordinates are sufficiently close, they are regarded as the same hand, and the tracking is determined to be successful. When the coordinates are separated by more than a predetermined value, they are regarded as different hands, and the tracking is determined to have failed. The coordinates used for this determination may include the coordinates of a rectangular region encompassing the entire hand or the coordinates of individual feature points.

If the tracking fails in step S2050, the liveness detection result is initialized to the initial state, "detecting," and the process returns to step S2030 (step S2061).

On the other hand, if the tracking succeeds in step S2050, the process branches depending on whether the liveness detection result is "detecting" or "detection successful" (step S2060).

If the liveness detection result is "detecting" in step S2060, the posture of the hand is estimated based on the coordinates of the hand feature points extracted in step S2040 (step S2070).

The posture to be estimated depends on the specific motion of the hand to be detected. Examples of specific hand motions include a hand rotation motion, a pinching motion with fingers, and a button-pressing motion with fingers, but are not limited thereto. The specific hand motion to be detected may be the same each time or may be randomly changed for each liveness detection.

The hand rotation motion is an action of turning the palm sideways to flip it over. Since a printed image on paper or an image displayed on a display cannot be flipped, this detection cannot succeed. In this case, the hand posture to be estimated is the rotation angle of the palm relative to the camera. When the hand feature points are represented in three-dimensional coordinates, the rotation angle can be obtained by calculating the degree of inclination of the hand with respect to a straight line connecting the camera and the hand. In addition to the method of directly estimating the hand rotation angle, it is also possible to estimate the rotation angle indirectly by utilizing the fact that the palm becomes vertically elongated when rotated, based on the confidence obtained from the two-dimensional coordinates of the feature points forming the palm or the aspect ratio of the rectangular region including the palm.

The pinching motion with fingers is a motion in which an object to be pinched is placed at an arbitrary position in the image captured by the camera, and the object is pinched with fingers. Since a printed image on paper or an image displayed on a display cannot perform such three-dimensional pinching motion, this detection cannot succeed. In this case, the hand posture to be estimated is the coordinates of the fingertips and the distance between the fingers used for pinching. When the thumb and index finger are used for pinching, the coordinates of the thumb tip and the index finger tip, and the distance between them, are calculated from the feature point coordinates.

The button-pressing motion with a finger is a motion in which a button to be pressed is placed at an arbitrary position in the image captured by the camera, and the user performs a button-pressing motion on it. It is difficult to successfully detect this motion with a printed image on paper or an image displayed on a display. Although it may be possible to succeed in detection by bringing an artificial object close to the camera, in such a case, not only the hand portion of the artificial object but also its background region would move together. Therefore, by analyzing the movement between frames of the hand region and the background region, detection can be achieved by confirming that the background movement is not synchronized with the hand movement. In this case, the hand posture to be estimated includes the depth coordinate of the fingertip feature point of the pressing finger (for example, the index finger) and the angle of the finger relative to the camera. Alternatively, instead of using the finger coordinate or angle, it is also possible to determine that a press has been made if the finger is placed on the button coordinate for a certain period of time. These parameters can be derived from the coordinates of the finger feature points.

Based on the hand posture estimated in step S2070, when a specific motion of the hand is detected, the liveness detection result is updated to "detection successful." When the specific motion of the hand cannot be detected, the result remains "detecting" (step S2072).

For example, when the specific motion of the hand is a hand rotation motion, if the palm has rotated by a predetermined angle, liveness detection is deemed successful, and "detection successful" is assigned to the liveness detection result. In this case, when the palm is rotated from a state facing the camera, turned once so that the back of the hand faces the camera, and then rotated again to make the palm face the camera, the liveness detection succeeds when the palm faces the camera, guiding the hand into the optimal posture for subsequent finger vein authentication or palmprint authentication. Therefore, this method not only performs liveness detection but also contributes to speeding up and improving the accuracy of subsequent biometric authentication.

When the specific motion of the hand is a pinching motion with fingers, if the distance between the two fingertip positions above the target object to be pinched becomes less than a predetermined threshold, liveness detection is deemed successful, and "detection successful" is assigned to the liveness detection result.

When the specific motion of the hand is a button-pressing motion with a finger, if the fingertip coordinate or the finger angle above the target object (for example, a button) exceeds a predetermined threshold, liveness detection is deemed successful, and " detection successful" is assigned to the liveness detection result.

When none of the above conditions are satisfied, it is determined that liveness detection has not been completed, and the detailed detection result remains "detecting."

The hand posture estimated in step S2070 and the detection state of the specific hand motion in step S2072 are superimposed and rendered by the image output unit 1040 on the camera image displayed on the output device 8050, such as the display of the client 1000 (step S2090).

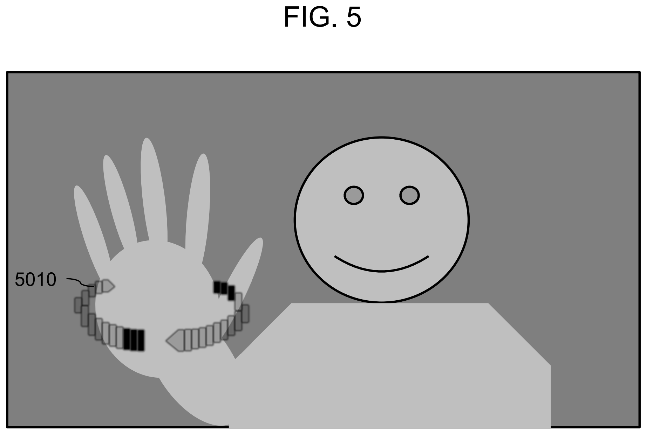

Here, the detection states rendered in step S2090 will be described with reference to Figs. 5 to 7.

Fig. 5 is a diagram showing an example of a detection state of a hand rotation motion rendered by the image output unit 1040.

In the example of Fig. 5, the direction of hand rotation in the camera image is indicated by an arrow 5010 divided into multiple segments, and the color of a portion of the arrow changes according to the amount of hand rotation. This makes it possible to provide feedback to the user regarding the direction of hand rotation and the current rotation amount.

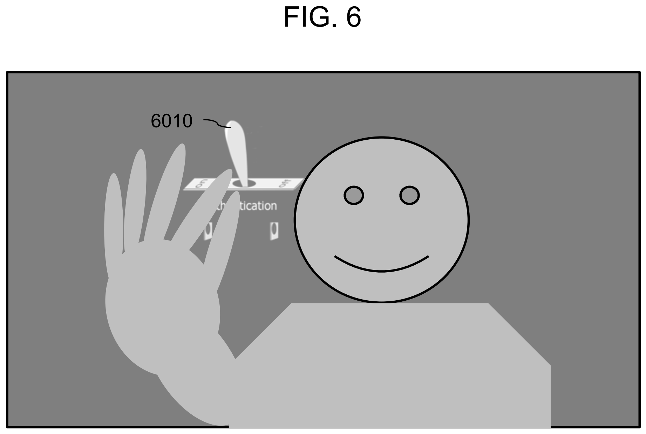

Fig. 6 is a diagram showing an example of a detection state of a pinching motion with fingers rendered by the image output unit 1040.

In the example of Fig. 6, a toggle switch 6010 to be pinched and operated with fingers is displayed at a random location in the camera image. When the user performs a pinching motion on the toggle switch 6010 and liveness detection succeeds, an image indicating that the position of the toggle switch 6010 has changed and is now in the ON state is displayed, thereby providing feedback to the user that the toggle switch 6010 has been pinched.

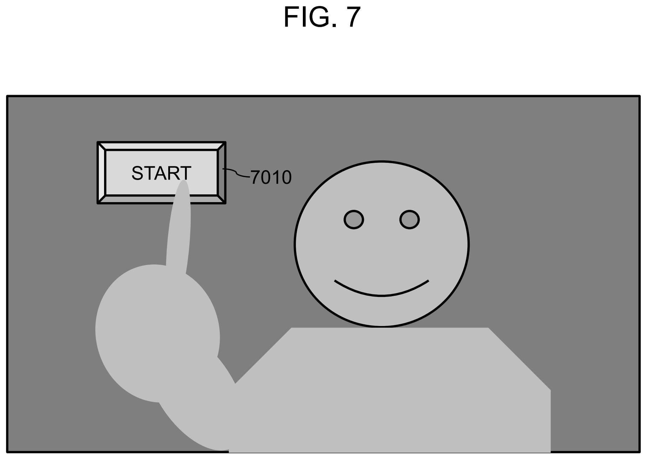

Fig. 7 is a diagram showing an example of a detection state of a button-pressing motion with a finger rendered by the image output unit 1040.

In the example of Fig. 7, a virtual button 7010 is displayed at a random position in the camera image. When the user performs a button-pressing motion with a finger on the button 7010 and liveness detection succeeds, the image is changed to show the state after the button 7010 has been pressed, thereby providing feedback to the user that the button 7010 has been pressed.

After the result image is rendered in step S2090, it is determined whether a timeout has occurred (step S2092). If, in step S2092, a certain period of time has elapsed since the start of the process and a timeout has occurred, the process ends as registration failure. If, in step S2092, the elapsed time is less than the predetermined threshold and a timeout has not occurred, the process returns to step S2030 and continues.

On the other hand, in step S2060, if the liveness detection result is "detection successful," the liveness detection process is completed, and the biometric registration process begins. First, biometric detection is performed from the camera images (step S2080). This biometric detection is a process of specifying the position of the living body in the camera image. For example, in face authentication, the position of the face region is detected; in finger-vein authentication, the position of the finger region is detected; and in palmprint authentication, the position of the palm region is detected.

Next, biometric feature extraction is performed on the living body detected in step S2080 (step S2082). In face authentication, biometric feature extraction is performed by cropping the face image and inputting it to a machine-learning model to obtain feature quantities. In finger-vein authentication, the finger image is cropped to obtain a vein pattern in which the vascular structure is enhanced. In palmprint authentication, the palm image is cropped to obtain a palmprint pattern.

Based on the biometric features extracted in step S2082, a registration template is generated (step S2084), and it is determined whether all the processes in steps S2080, S2082, and S2084 have been successfully completed and the registration template has been successfully generated (step S2086).

If, in step S2086, it is determined that the template generation has failed, the process proceeds to step S2090 to attempt template generation again.

On the other hand, if, in step S2086, it is determined that the template generation has succeeded, the generated template is associated with the user ID input in step S2010 and registered in the template storage unit 1090 (step S2088), and the process is completed as successful biometric registration.

According to the biometric registration process shown in Fig. 3, biometric registration is performed after confirming through liveness detection that the subject is not an artificial object, and the template is registered in the template storage unit 1090. This completes the initial registration of the biometric authentication system, allowing biometric authentication to be used thereafter.

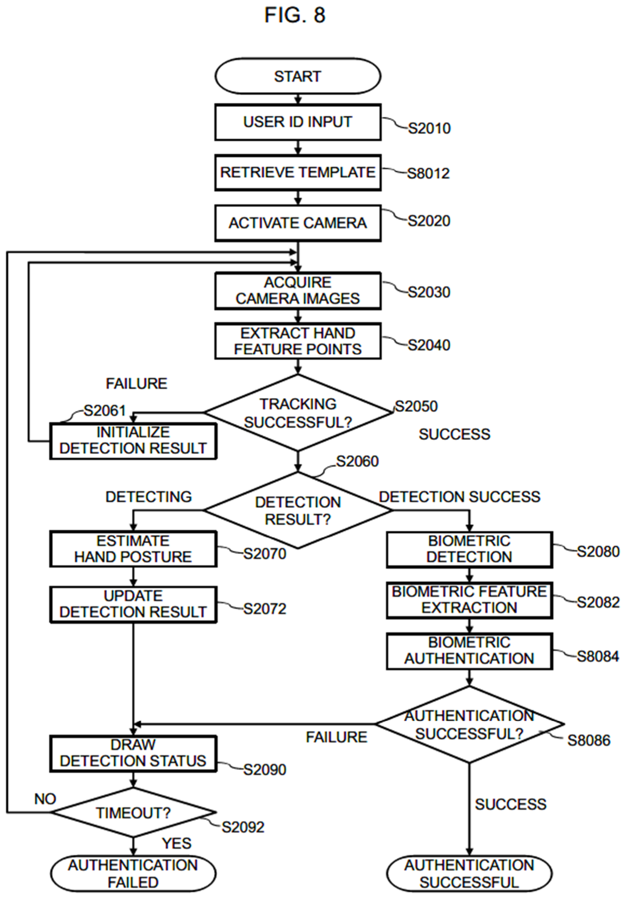

Next, the procedure for performing biometric authentication using the client 1000 will be described with reference to Fig. 8.

Fig. 8 is a flowchart showing an example of a biometric authentication process including liveness detection executed by the client 1000 according to the present embodiment. In Fig. 8, the same reference numerals are assigned to the same processes as those in Fig. 3, and their descriptions are omitted.

In Fig. 8, after acquiring the user ID in step S2010, the template registered in the template storage unit 1090 is acquired (step S3012). Since the template is stored in the template storage unit 1090 in association with the user ID in step S2088, the template can be obtained using the user ID as a key. Note that, in 1:1 authentication, where a specific user is designated for authentication, steps S2010 and S3012 are required, whereas in 1:N authentication, which identifies who the user is without specifying the user in advance, steps S2010 and S3012 are unnecessary.

The procedure from camera image acquisition to liveness detection (steps S2030, S2040, S2050, S2060, S2061, S2070, S2072, S2090, and S2092) is the same as in the biometric registration process shown in Fig. 3. However, in cases where liveness detection is performed only during registration and not during authentication, all steps from S2030 to S2092 may be omitted, and the process may proceed from the camera activation step S2020 directly to the biometric detection step S2080.

The biometric detection step S2080 and the biometric feature extraction step S2082 are the same as those in the biometric registration process.

Next, biometric authentication is performed by comparing the biometric features extracted in step S2082 with the template registered in the template generation unit 1072 in association with the user ID input in step S2010 (step S3084).

Next, it is determined whether the biometric features extracted in step S2082 match the template registered in the template generation unit 1072 in association with the user ID input in step S2010, and whether biometric authentication has succeeded (step S3086).

If biometric authentication succeeds in step S3086, the process ends as authentication success. On the other hand, if biometric authentication fails in step S3086, the process proceeds to step S2090, and processing continues.

According to the biometric authentication process shown in Fig. 8, biometric authentication can be performed after conducting liveness detection to confirm that the subject is not an artificial object.

In addition, in cases of biometric authentication using other body parts such as face authentication, detection and tracking of body parts other than the hand can also be performed.

Furthermore, in a system that uses a body part other than the hand for authentication, when an impersonation attack using an artificial object is attempted, two types of attacks can be considered: an attack in which both the hand and another body part are simultaneously presented as artificial objects, and an attack in which only the body part used for authentication is presented as an artificial object.

In the former case, it is necessary to present both the hand and another body part as artificial objects simultaneously and perform a specific motion. Compared to an attack presenting only a single body part as an artificial object, the level of difficulty is significantly higher. For example, since it would require generating both the hand and face artificially and performing specific motions in real time using deepfake technology, the technical difficulty is high.

In the latter case, only another body part is presented as an artificial object while the hand of an actual person is used. Although the technical difficulty is lower than in the former case, successful authentication after bypassing liveness detection is still difficult because it is necessary to appropriately present both the hand and the artificial object simultaneously.

Moreover, by detecting that the hand and the other body part belong to the same living body based on observations such as synchronized movement or matching pulse cycles, even more reliable liveness detection can be achieved.

According to the present embodiment, since the system determines that the hand is a living body by extracting hand feature points from a camera image, estimating hand posture from the feature points, and detecting specific hand motions from the posture, liveness detection can be performed quickly.

Furthermore, according to the present embodiment, since a general-purpose camera can be used to acquire camera images, there is no need to prepare dedicated sensors or high-performance cameras, thereby reducing costs and enabling the present embodiment to be introduced into existing devices.

Additionally, according to the present embodiment, since the specific hand motions to be detected are relatively large, the liveness detection is less affected by frame rate or resolution, allowing stable detection.

Moreover, according to the present embodiment, since liveness detection does not use machine learning, it is less affected by changes in environmental conditions or camera differences and can cope with previously unknown artificial objects.

In addition, according to the present embodiment, since liveness detection is performed only by detecting hand motions, it is possible to perform liveness detection without capturing the user's face.

It should be noted that the present invention is not limited to the embodiments described above, and various modifications are included. For example, the above-described embodiments have been explained in detail for ease of understanding the present invention and are not necessarily limited to configurations including all the components described. Part of the configuration of one embodiment may be replaced with that of another embodiment, or additional configurations of another embodiment may be added. Furthermore, part of the configuration of each embodiment may be added to, deleted from, or replaced by other configurations.

## Claims

1. A biometric authentication system that performs personal authentication using pre-registered biometric information, comprising:
an image acquisition unit that acquires images in a time series;
a posture estimation unit that estimates a posture of a hand based on the acquired images; and
a liveness detection unit that determines that the hand is a living body when a specific motion of the hand is detected based on the estimated posture.

2. The biometric authentication system according to claim 1,
wherein the specific motion is a motion of pressing a button with a finger.

3. The biometric authentication system according to claim 1,
wherein the specific motion is a motion of rotating a palm.

4. The biometric authentication system according to claim 1,
wherein the specific motion is a motion of pinching with fingers.

5. The biometric authentication system according to claim 1, further comprising:
a biometric detection unit that detects a living body from the acquired images,
a biometric feature extraction unit that extracts biometric features based on the detected living body, and
a registration unit that registers the extracted biometric features when the liveness detection unit determines that the hand is a living body.

6. The biometric authentication system according to claim 5, further comprising:
a biometric authentication unit that performs the personal authentication by comparing the biometric features extracted by the biometric feature extraction unit with the biometric features registered in the registration unit when the liveness detection unit determines that the hand is a living body.

7. The biometric authentication system according to claim 1, further comprising:
an image output unit that displays, overlaid on the acquired images, a detection status of the specific motion.

8. The biometric authentication system according to claim 1, further comprising:
a feature point extraction unit that extracts feature points of the hand based on the acquired images,
wherein the posture estimation unit estimates the hand posture based on the extracted feature points.
